# EUROPEAN PATENT APPLICATION

(11) **EP 3 961 328 A1**
(43) Date of publication of application: **02.03.2022**
(21) Application number: 20934895.2
(22) Date of filing: 31.07.2020
(51) Int. Cl.: G05B 19/418, G01M 17/08

(54) **INTEGRATED CONTROL SYSTEM AND METHOD FOR RAILWAY VEHICLE COLLISION TEST**

(30) Priority: 29.06.2020 CN 202010606791
(71) Applicant: CRRC Changchun Railway Vehicles Co., Ltd., Changchun, Jilin 130000 (CN)
(72) Inventor: WANG, Lu, Changchun, Jilin 130000 (CN); LIU, Yanwen, Changchun, Jilin 130000 (CN); LIU, Chunyan, Changchun, Jilin 130000 (CN); HU, Zhongan, Changchun, Jilin 130000 (CN)
(74) Representative: Behr, Wolfgang
(86) International application number: PCT/CN2020/106062
(87) International publication number: WO 2022/000679

(57) **Abstract**

An integrated control system and method for a rail vehicle collision test are provided. The integrated control system includes: an industrial control subsystem, a video monitoring and wireless network integration subsystem, a database subsystem, a ground speed measurement and positioning subsystem, and a centralized control center control room subsystem. The centralized control center control room subsystem obtains a system status of one or more subsystems of the industrial control subsystem, sends a control signal to the industrial control subsystem based on the system status or an experimental requirement, and sends a control instruction based on a real-time speed and a positioning information of a preset position point, and displays a shooting video. It can be seen that, signal interaction is performed among the various subsystems in the integrated control system for a rail vehicle collision test, thus the coordination performance of a rail vehicle collision test system is improved.

## Description

The present application claims priority to Chinese Patent Application No. 202010606791.8, titled "INTEGRATED CONTROL SYSTEM AND CONTROL METHOD FOR RAIL VEHICLE COLLISION TEST", filed on June 29, 2020 with the China National Intellectual Property Administration, which is incorporated herein by reference in its entirety.

### FIELD

The present disclosure relates to the technical field of vehicle performance test, and in particular, to an integrated control system and control method for a rail vehicle collision test.

### BACKGROUND

Personal safety of passengers is under threat once a rail vehicle collision accident occurs. To reduce the loss caused by the rail vehicle collision accident, it is usually necessary to carry out a collision test on the rail vehicle to test the crashworthiness of various parts of the rail vehicle, so as to improve the rail vehicle and reduce the loss of the rail vehicle collision accident.

Applicants found that the current rail vehicle collision test system includes multiple independent control subsystems such as an intelligent driving subsystem, a lighting control subsystem, a high-speed camera subsystem, a dynamic force measurement subsystem, an on-board test subsystem, a collision vehicle subsystem, etc. Each subsystem is controlled independently, and no signal and data interaction is performed among the multiple subsystems, resulting in poor coordination performance of the rail vehicle collision test system.

Therefore, it is a major technical problem to be solved urgently by those skilled in the art to provide an integrated control system and control method for a rail vehicle collision test, to realize signal interaction among various subsystems and improve coordination performance of the rail vehicle collision test system.

### SUMMARY

In view of the above, an integrated control system and control method for a rail vehicle collision test is provided according to embodiments of the present disclosure, to realize signal interaction among various subsystems and improve coordination performance of a rail vehicle collision test system.

To achieve the above objective, following technical solutions are provided according to embodiments of the present disclosure.

An integrated control system for a rail vehicle collision test includes an industrial control subsystem, a video monitoring and wireless network integration subsystem, a database subsystem, a ground speed measurement and positioning subsystem and a centralized control center control room subsystem. The industrial control subsystem includes one or more subsystems of a collision vehicle subsystem, a high-speed camera subsystem, a lighting control subsystem, a dynamic force measurement subsystem, an on-board test subsystem, an intelligent driving subsystem, and a synchronous triggering subsystem. The industrial control subsystem is configured to: send a system status of the one or more subsystems to the centralized control center control room subsystem, and perform an operation based on a control signal sent by the centralized control center control room subsystem. The control signal includes a synchronization signal, a trigger signal, and an emergency stop signal. The video monitoring and wireless network integration subsystem is configured to: obtain a shooting video of a test rail vehicle in a collision test, create a data transmission network, and transmit the shooting video to the centralized control center control room subsystem and the database subsystem through the data transmission network. The database subsystem is configured to store the shooting video. The ground speed measurement and positioning subsystem is configured to: obtain a real-time speed of the test rail vehicle when the test rail vehicle passes a preset position point in the collision test, send the real-time speed and positioning information of the preset position point to the centralized control center control room subsystem, and receive a control instruction sent by the centralized control center control room subsystem. The centralized control center control room subsystem is configured to: display the shooting video, obtain the system status of the one or more subsystems of the industrial control subsystem, send the control signal to the industrial control subsystem based on the system status or an experimental requirement, and send the control instruction based on the real-time speed and the positioning information of the preset position point.

Optionally, the centralized control center control room subsystem being configured to obtain the system status of the one or more subsystems of the industrial control subsystem and send the control signal to the industrial control subsystem based on the system status or the experimental requirement includes the centralized control center control room subsystem being configured to: determine whether the system status includes a system failure status, and send the emergency stop signal to the industrial control subsystem in case of determining that the system status includes the system failure status.

Optionally, the centralized control center control room subsystem being configured to send the control instruction based on the real-time speed and the positioning information of the preset position point includes the centralized control center control room subsystem being configured to: determine whether an absolute value of a difference between the real-time speed and a preset speed is greater than a first preset difference value, send a speed control instruction to the industrial control subsystem in case of determining that the absolute value of the difference between the real-time speed and the preset speed is greater than the first preset difference value, and send an emergency stop instruction to the industrial control subsystem in case of determining that the absolute value of the difference between the real-time speed and the preset speed is not greater than the first preset difference value.

Optionally, the collision vehicle subsystem is configured to: control the test rail vehicle to perform a decoupling operation in a case that the emergency stop signal is not received within a preset time period when the test rail vehicle is in the collision test.

Optionally, the collision vehicle subsystem is configured to: send a decoupling state to the centralized control center control room subsystem.

An integrated control method for a rail vehicle collision test is provided. The integrated control method is applied to the integrated control system for a rail vehicle collision test described above. The integrated control method includes: obtaining a system status of each subsystem, and determining a control signal based on the system status or an experimental requirement; obtaining a shooting video of a test rail vehicle in a collision test, creating a data transmission network, and transmitting the shooting video through the data transmission network; obtaining a real-time speed of the test rail vehicle when the test rail vehicle passes a preset position point in the collision test and positioning information of the preset position point; determining a control instruction based on the real-time speed and the positioning information of the preset position point; and performing an operation based on the control signal and the control instruction, where the control signal includes a synchronization signal, a trigger signal, and an emergency stop signal.

Optionally, the obtaining a system status of each subsystem and determining a control signal based on the system status or an experimental requirement includes: determining whether the system status includes a system failure status, and sending the emergency stop signal to the industrial control subsystem in case of determining that the system status includes the system failure status.

Optionally, the determining a control instruction based on the real-time speed and the positioning information of the preset position point includes: determining whether an absolute value of a difference between the real-time speed and a preset speed is greater than a first preset difference value; sending a speed control instruction to the industrial control subsystem in case of determining that the absolute value of the difference between the real-time speed and the preset speed is greater than the first preset difference value; and sending an emergency stop instruction to the industrial control subsystem in case of determining that the absolute value of the difference between the real-time speed and the preset speed is not greater than the first preset difference value.

Optionally, the integrated control method further includes: controlling the test rail vehicle to perform a decoupling operation in a case that the emergency stop signal is not received within a preset time period when the test rail vehicle is in the collision test.

Optionally, the integrated control method further includes: sending a decoupling state to the centralized control center control room subsystem.

An integrated control system and method for a rail vehicle collision test is provided according to embodiments of the present disclosure. The integrated control system includes: an industrial control subsystem, a video monitoring and wireless network integration subsystem, a database subsystem, a ground speed measurement and positioning subsystem, and a centralized control center control room subsystem. The industrial control subsystem sends a system status of the one or more subsystems to the centralized control center control room subsystem, and performs a corresponding operation based on a control signal sent by the centralized control center control room subsystem. The video monitoring and wireless network integration subsystem obtains a shooting video of a test rail vehicle in a collision test, creates a data transmission network, and transmits the shooting video to the centralized control center control room subsystem and the database subsystem through the data transmission network. The database subsystem stores the shooting video. The ground speed measurement and positioning subsystem obtains a real-time speed of the test rail vehicle when passing a preset position point in the collision test, sends the real-time speed and positioning information of the preset position point to the centralized control center control room subsystem, and receives a control instruction sent by the centralized control center control room subsystem. The centralized control center control room subsystem displays the shooting video, obtains the system status of the one or more subsystems of the industrial control subsystem, sends the control signal to the industrial control subsystem based on the system status or an experimental requirement, and sends the control instruction based on the real-time speed and the positioning information of the preset position point. It can be seen that, signal interaction is performed among the various subsystems in the integrated control system for a rail vehicle collision test provided by the embodiments of the present disclosure, thus the coordination performance of the rail vehicle collision test system is improved.

### BRIEF DESCRIPTION OF THE DRAWINGS

In order to more clearly illustrate technical solutions in embodiments of the present disclosure or in the conventional technology, drawings used in the description of the embodiments or the conventional technology are introduced briefly hereinafter. Apparently, the drawings described in the following illustrate some embodiments of the present disclosure; other drawings may be obtained by those ordinarily skilled in the art based on these drawings without any creative efforts.
Figure 1 is a schematic structural diagram of a network topology of an integrated control system for a rail vehicle collision test according to an embodiment of the present disclosure;
Figure 2 is a schematic structural diagram of an industrial control subsystem according to an embodiment of the present disclosure;
Figure 3 is a schematic diagram of a connection between a video monitoring and wireless network integration subsystem and other subsystems according to an embodiment of the present disclosure;
Figure 4 is a schematic diagram of an architecture of a video monitoring and wireless network integration subsystem according to an embodiment of the present disclosure;
Figure 5 is a diagram of a network architecture of a video monitoring and wireless network integration subsystem according to an embodiment of the present disclosure;
Figure 6 is a schematic structural diagram of a ground speed measurement and positioning subsystem according to an embodiment of the present disclosure;
Figure 7 is a schematic structural diagram of a centralized control center control room subsystem according to an embodiment of the present disclosure;
Figure 8 is a schematic diagram of an communication interface of each subsystem in an integrated control system for a rail vehicle collision test according to an embodiment of the present disclosure;
Figure 9 is a schematic flow chart of an operation process of an integrated control system for a rail vehicle collision test according to an embodiment of the present disclosure;
Figure 10 is a flow chart of a working process of a test parameter configuration module according to an embodiment of the present disclosure;
Figure 11 is a flow chart of a working process of a test process parameter configuration module according to an embodiment of the present disclosure;
Figure 12 is a flow chart of a working process of a test result parameter configuration module according to an embodiment of the present disclosure;
Figure 13 is a schematic flow chart of an integrated control method for a rail vehicle collision test according to an embodiment of the present disclosure;
Figure 14 is a schematic diagram of a software layer structure of an integrated control system according to an embodiment of the present disclosure; and
Figure 15 is a flow chart of a software operation process of an integrated control system according to an embodiment of the present disclosure.

### DETAILED DESCRIPTION

As stated in the background part, each subsystem in the current rail vehicle collision test system is controlled independently, and no signal and data interaction is performed among multiple subsystems, resulting in poor coordination performance of the rail vehicle collision test system. In view of this, an integrated control system and control method for a rail vehicle collision test are provided according to embodiments of the present disclosure, to realize signal interaction among various subsystems and improve coordination performance of the rail vehicle collision test system.

Specifically, to provide an integrated control system for a rail vehicle collision test, at least the following problems should be considered and solved:
1) provide wired network in a control room and a collision test site, and provide WLAN at the collision test site and along a collision route, to provide support for data transmission from each subsystem to the control room;
2) detect a status of each subsystem through a hardwire or a network in real time;
3) issue a control instruction (trigger or urgently brake) to each subsystem through a hardwire or network according to control logic;
4) provide a trigger belt device for each subsystem on a track at a collision site;
5) build a ground speed measurement and positioning subsystem to realize vehicle positioning and speed monitoring;
6) build a video monitoring subsystem to realize the video monitoring, screen cutting, and playback of the test site, including drone aerial photography;
7) complete the design and development of a console, where the console in a control room can provide a host computer installation station for 5 subsystems including an integrated control system, a high-speed camera subsystem, a lighting control subsystem, a on-board test subsystem, and a dynamic force measurement subsystem, and provide a display for each subsystem;
8) complete the design and development of a large screen in the control room, where the large screen can display a program interface of the integrated control system, an on-site video monitoring signal and a video signal of each subsystem computer, and the large screen can display mixed information as needed or separately display a certain subsystem;
9) control a collision velocity accurately, with an error within ±0.5Km/h.

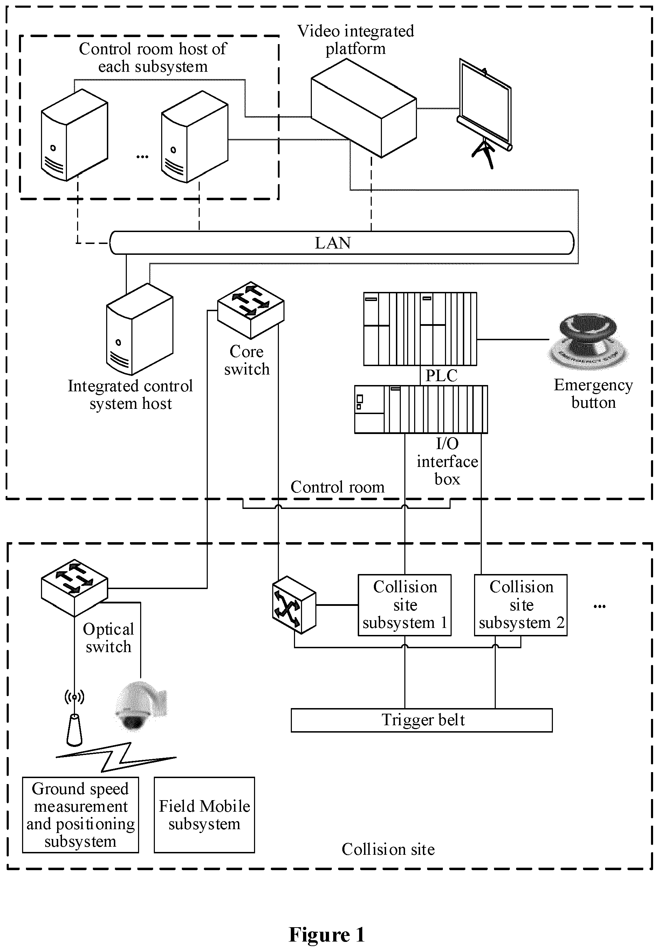

Specifically, reference is made to Figure 1, which is a schematic structural diagram of a network topology of an integrated control system for a rail vehicle collision test according to an embodiment of the present disclosure. The integrated control system includes: an industrial control subsystem, a video monitoring and wireless network integration subsystem, a database subsystem, a ground speed measurement and positioning subsystem, and a centralized control center control room subsystem.

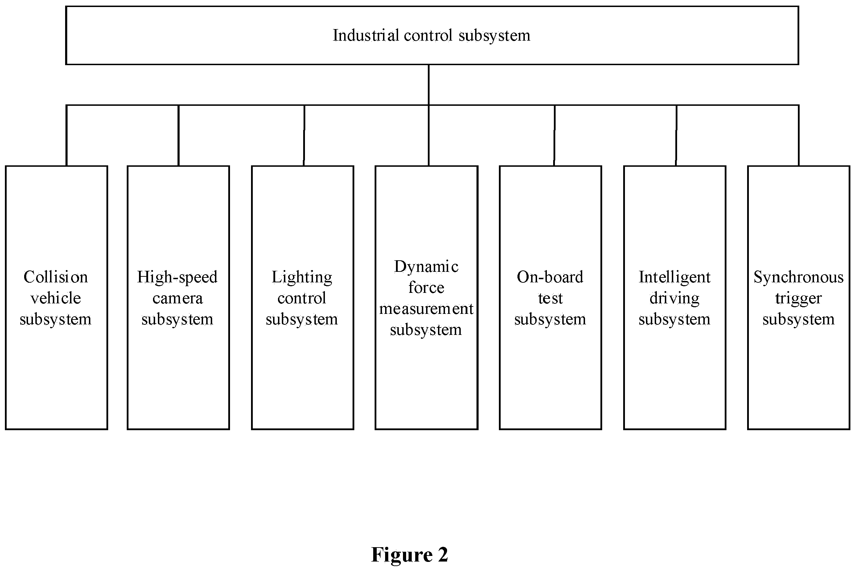

As shown in Figure 2, the industrial control subsystem includes one or more subsystems of a collision vehicle subsystem, a high-speed camera subsystem, a lighting control subsystem, a dynamic force measurement subsystem, an on-board test subsystem, an intelligent driving subsystem, and a synchronous triggering subsystem. The industrial control subsystem is configured to: send a system status of the one or more subsystems to a centralized control center control room subsystem, and perform a corresponding operation based on a control signal sent by the centralized control center control room subsystem. The control signal includes a synchronization signal, a trigger signal, and an emergency stop signal.

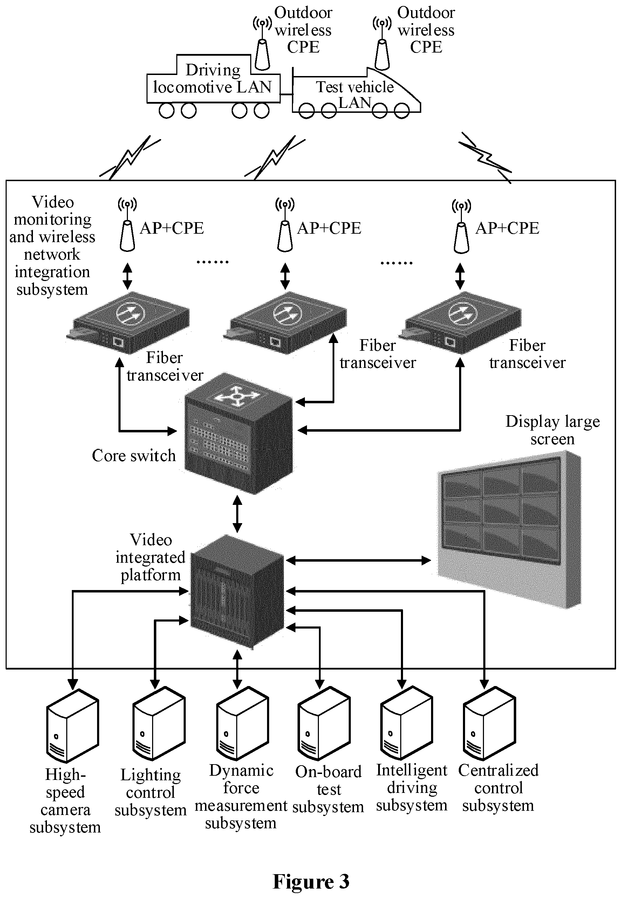

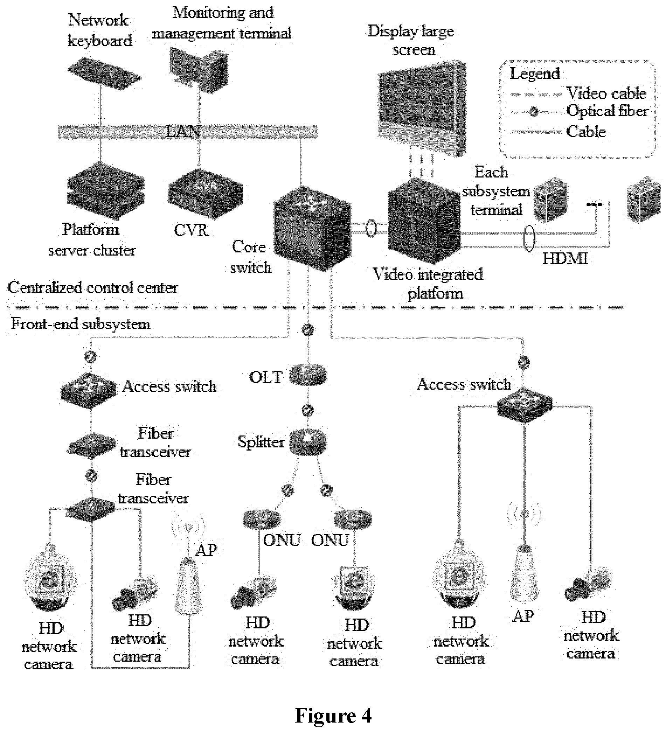

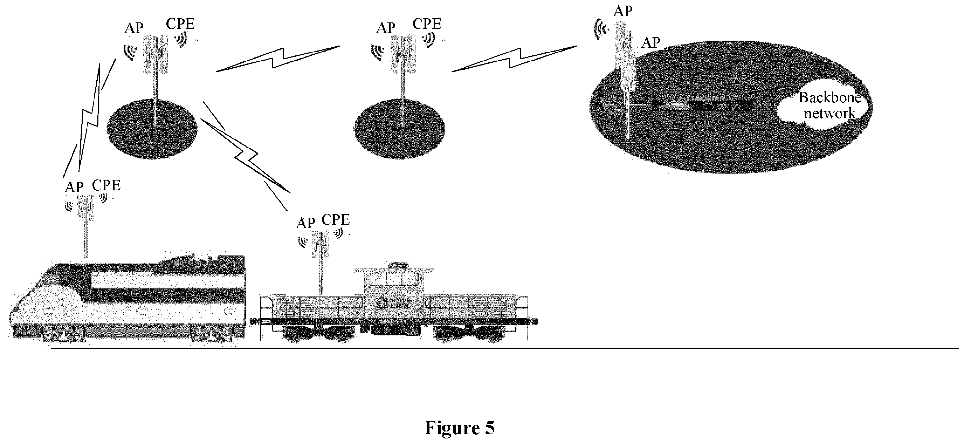

Referring to Figures 3 to 5, in which Figure 3 is a schematic diagram of a connection between a video monitoring and wireless network integration subsystem and other subsystems, Figure 4 is a schematic diagram of an architecture of a video monitoring and wireless network integration subsystem, and Figure 5 is a diagram of a network architecture of a video monitoring and wireless network integration subsystem. The video monitoring and wireless network integration subsystem is configured to: obtain a shooting video of a test rail vehicle in a collision test, create a data transmission network, and transmit the shooting video to the centralized control center control room subsystem and the database subsystem through the data transmission network.

The database subsystem is configured to store the shooting video.

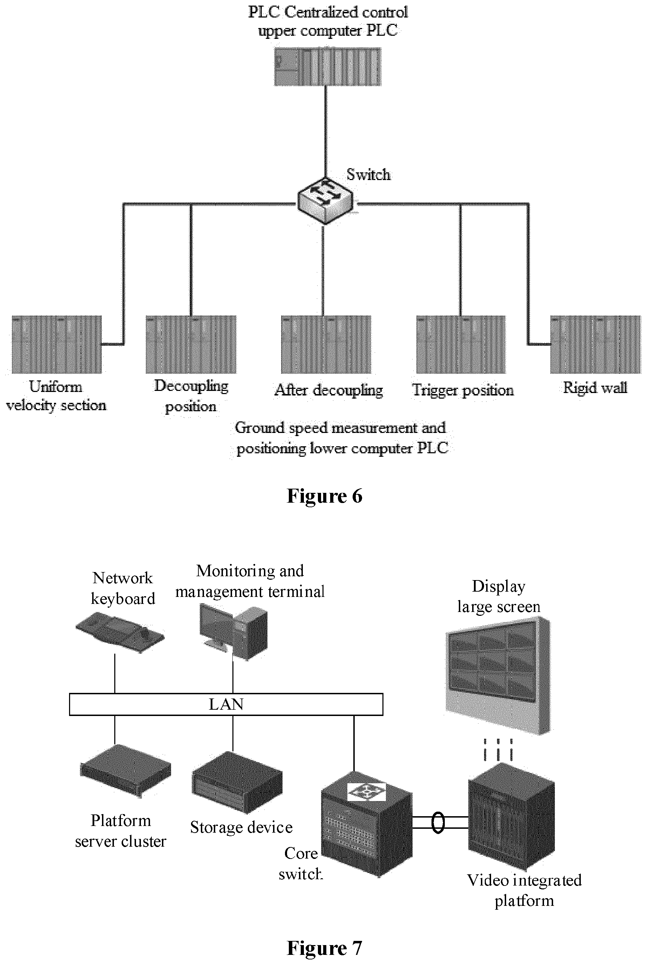

As shown in Figure 6, the ground speed measurement and positioning subsystem is configured to: obtain a real-time speed of the test rail vehicle when passing a preset position point in the collision test, send the real-time speed and positioning information of the preset position point to the centralized control center control room subsystem, and receive a control instruction sent by the centralized control center control room subsystem.

As shown in Figure 7, the centralized control center control room subsystem is configured to: display the shooting video, obtain the system status of the one or more subsystems of the industrial control subsystem, send the control signal to the industrial control subsystem based on the system status or an experimental requirement, and send the control instruction based on the real-time speed and the positioning information of the preset position point.

In this embodiment, the integrated control system for the rail vehicle collision test does not directly control devices of each subsystem, but plays a coordinating role. That is, the integrated control system sends a trigger signal to each subsystem when test conditions are ready, and each subsystem sends a status of the subsystem to the integrated control system. The integrated control system sends a command to urgently cancel the collision test to all subsystems when detecting that the status of a subsystem is abnormal. Once the test vehicle is decoupled without a braking capability, the collision after decoupling cannot be avoided, thus the integrated control system aims to work before decoupling.

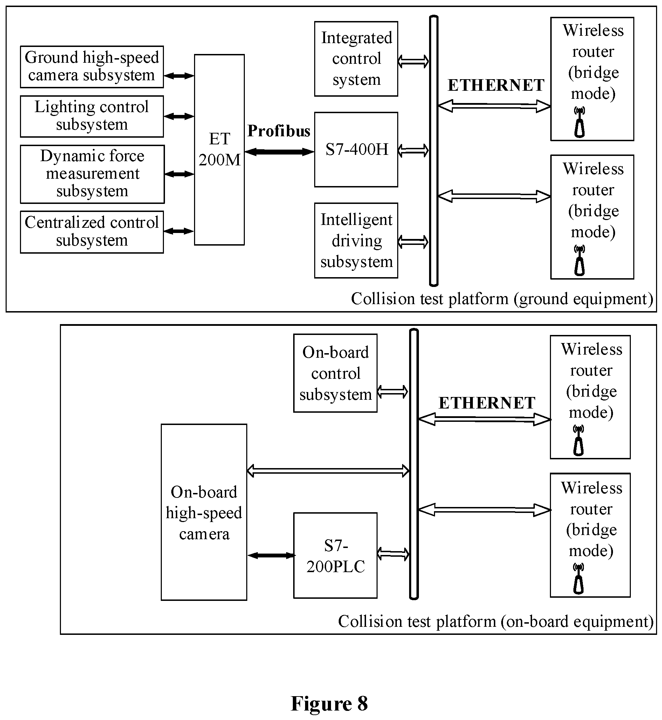

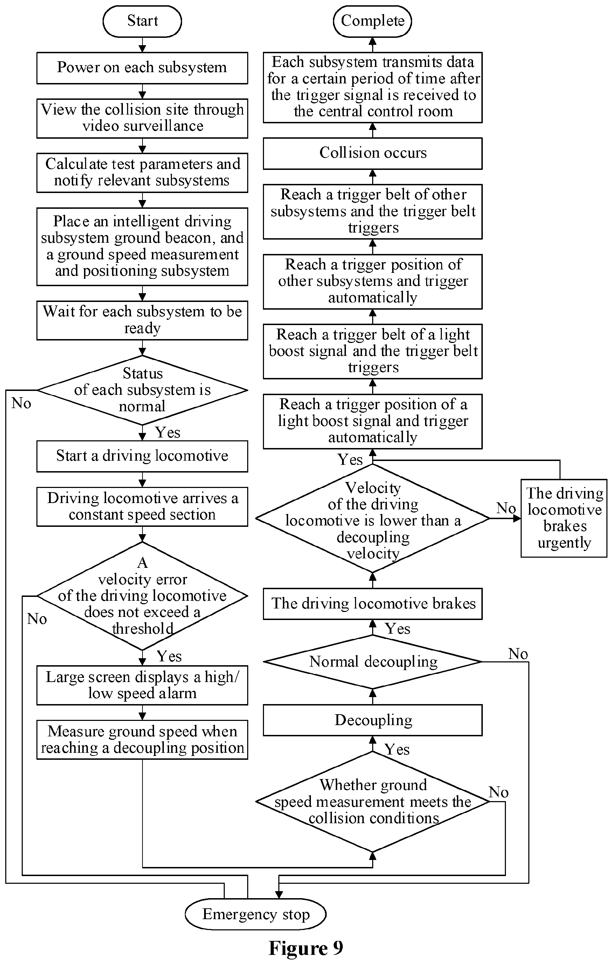

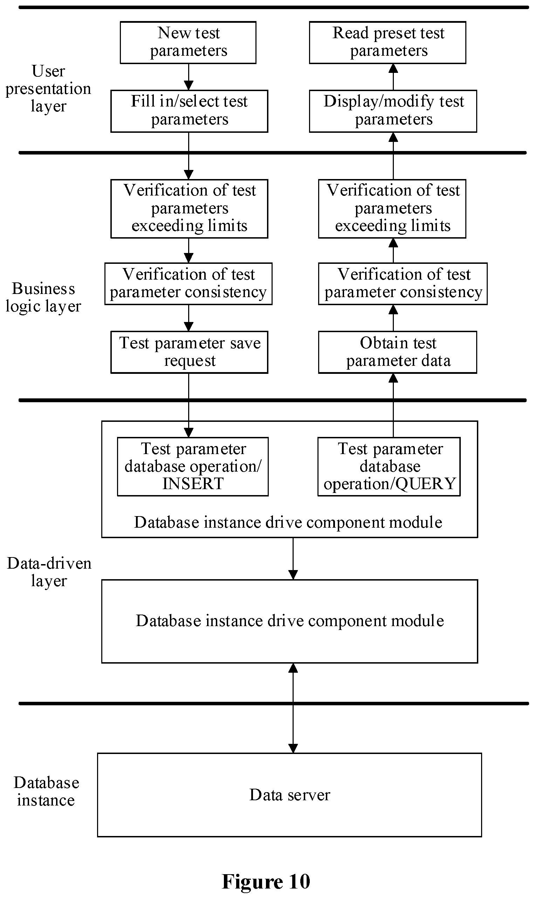

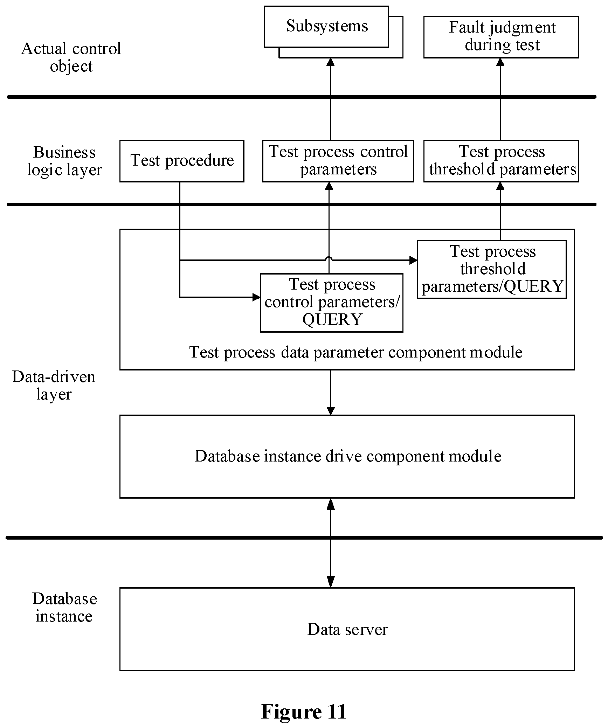

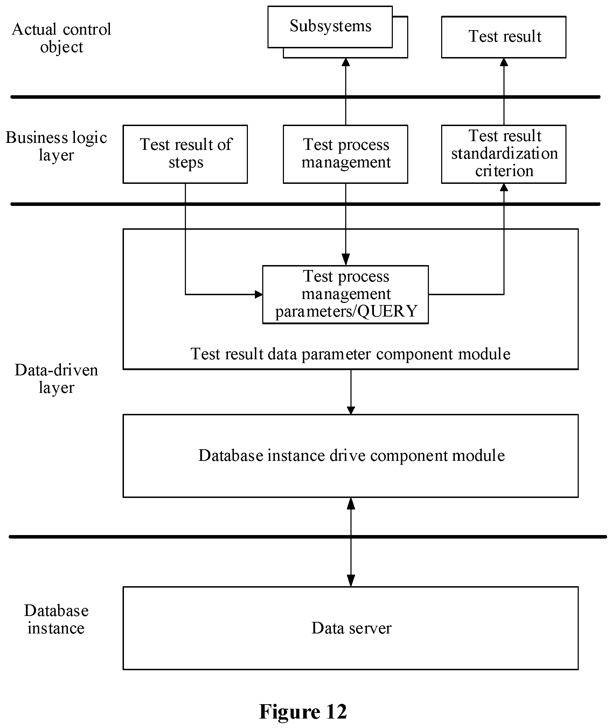

Illustratively, referring to Figure 8, which is a schematic diagram of a communication interface of each subsystem in an integrated control system for a rail vehicle collision test according to an embodiment of the present disclosure. An operation process of the integrated control system is shown in Figure 9, which is described in detail hereinafter:
1) start a collision test, and power on each subsystem;
2) control a large screen in a control room to display in real time a monitoring video of a collision site and a status of each subsystem during the collision test;
3) provide important test parameters such as a decoupling position and a decoupling velocity based on an obtained model or test conditions, and display the test parameters on the large screen, a flow chart of a working process of a test parameter configuration module is shown in Figure 10;
4) place an intelligent driving subsystem ground beacon, and a ground speed measurement and positioning subsystem based on the decoupling position;
5) wait for each subsystem to be ready;
6) after detecting that status of all subsystems is normal, control a driving locomotive to run (a status of each subsystem is tested cyclically; and press an emergency stop button on a console in a control room if a status of a subsystem is abnormal before the driving locomotive is decoupled from a test vehicle, so that the driving locomotive performs urgent braking operation and the collision test is stopped; the test vehicle reserves a brake operation, and press the emergency stop button on the console in the control room if the status of the subsystem is abnormal after the driving locomotive is decoupled from the test vehicle, to perform the urgent braking operation on the test vehicle and stop the collision test); a flow chart of a working process of a test process parameter configuration module is shown in Figure 11;
7) test whether an error between a velocity of the driving locomotive and a set value meets the requirements when the driving locomotive is running to a constant speed section, display a high/low speed alarm on the large screen when the error is within a certain range, to prompt the intelligent driving subsystem to adjust a velocity, and the driving locomotive brakes urgently and stop the collision test if the error is too large;
8) control the driving locomotive to be decoupled if no emergency stop command sent by the integrated control system is received by the driving locomotive control subsystem until the driving locomotive reaches the decoupling position;
9) after decoupling, send a decoupling status to the integrated control system, check whether the decoupling status is normal, the driving locomotive brakes urgently and stop the collision test if the decoupling status is abnormal;
10) after normal decoupling, the driving locomotive performs a normal braking operation;
11) the integrated control system issues a urgent braking instruction to the intelligent driving subsystem to suspend the collision test if the normal braking operation of the driving locomotive fails and the driving locomotive is not decelerated;
12) the integrated control system sends a Boost trigger signal to the lighting subsystem when the test vehicle runs idly to a position corresponding to a light Boost trigger signal;
13) a trigger belt sends a Boost trigger signal to the lighting subsystem when the test vehicle runs idly to a position corresponding to a light Boost trigger belt;
14) the integrated control system sends a trigger signal to other subsystems when the test vehicle runs idly to a position corresponding to a trigger signal of other subsystems;
15) a trigger belt sends a trigger signal to other subsystems when the test vehicle runs idly to a position corresponding to a trigger belt of other subsystems;
16) a collision occurs;
17) each subsystem transmits data for a certain period of time after the trigger signal is received to the central control room, and a flow chart of a working process of a test result parameter configuration module is shown in Figure 12;
18) complete the collision test.

It can be seen that, the industrial control subsystem, the video monitoring and wireless network integration subsystem, the database subsystem, the ground speed measurement and positioning subsystem, and the centralized control center control room subsystem are designed and built, to monitor and display the status of each subsystem, control the issuing of control instructions, and provide support for data transmission from each subsystem to the control room. Video monitoring, data display, and status control of the entire collision test can be realized in the control room, thereby greatly improving the controllability, safety and stability of the collision test, and ensuring the ability of the rail vehicle collision test system on rail vehicle collision test research, collision performance evaluation and collision accident recovery.

In an embodiment, it is provided an implement manner of the centralized control center control room subsystem obtaining the system status of the one or more subsystems of the industrial control subsystem and sending the control signal to the industrial control subsystem based on the system status or the experimental requirement. The centralized control center control room subsystem is further configured to: determine whether the system status includes a system failure status, and send the emergency stop signal to the industrial control subsystem in case of determining that the system status includes the system failure status.

In an embodiment, it is provided an implement manner of the centralized control center control room subsystem sending the control instruction based on the real-time speed and the positioning information of the preset position point. The centralized control center control room subsystem is further configured to: determine whether an absolute value of a difference between the real-time speed and a preset speed is greater than a first preset difference value, send a speed control instruction to the industrial control subsystem in case of determining that the absolute value of the difference between the real-time speed and the preset speed is greater than the first preset difference value, and send an emergency stop instruction to the industrial control subsystem in case of determining that the absolute value of the difference between the real-time speed and the preset speed is not greater than the first preset difference value.

It should be noted that, in an embodiment, the collision vehicle subsystem is configured to control the test rail vehicle to perform a decoupling operation in a case that the emergency stop signal is not received within a preset time period when the test rail vehicle is in the collision test. And after that, the collision vehicle subsystem is configured to send a decoupling state to the centralized control center control room subsystem.

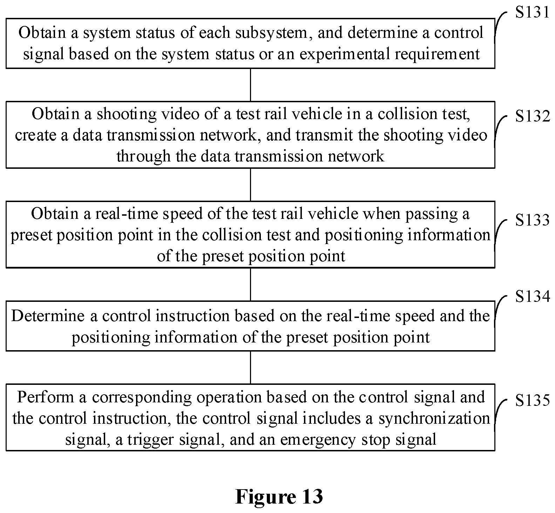

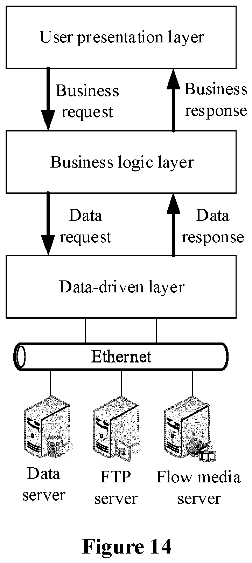

Based on the above embodiment, referring to Figure 13, an integrated control method for a rail vehicle collision test is provided according to an embodiment of the present disclosure. The integrated control method is applied to the integrated control system for the rail vehicle collision test described above. A software layer structure of the integrated control system is shown in Figure 14. And the integrated control method includes following S131 to S135.

In S131, obtain a system status of each subsystem, and determine a control signal based on the system status or an experimental requirement.

In S132, obtain a shooting video of a test rail vehicle in a collision test, create a data transmission network, and transmit the shooting video through the data transmission network.

In S133, obtain a real-time speed of the test rail vehicle when passing a preset position point in the collision test and positioning information of the preset position point.

In S134, determine a control instruction based on the real-time speed and the positioning information of the preset position point.

In S135, perform a corresponding operation based on the control signal and the control instruction, where the control signal includes a synchronization signal, a trigger signal, and an emergency stop signal.

The obtaining a system status of each subsystem, and determining a control signal based on the system status or an experimental requirement includes: determining whether the system status includes a system failure status, and sending the emergency stop signal to the industrial control subsystem in case of determining that the system status includes the system failure status.

The determining a control instruction based on the real-time speed and the positioning information of the preset position point includes: determining whether an absolute value of a difference between the real-time speed and a preset speed is greater than a first preset difference value; sending a speed control instruction to the industrial control subsystem in case of determining that the absolute value of the difference between the real-time speed and the preset speed is greater than the first preset difference value; and sending an emergency stop instruction to the industrial control subsystem in case of determining that the absolute value of the difference between the real-time speed and the preset speed is not greater than the first preset difference value.

The integrated control method for a rail vehicle collision test further includes: controlling the test rail vehicle to perform a decoupling operation in a case that the emergency stop signal is not received within a preset time period when the test rail vehicle is in the collision test. The integrated control method for a rail vehicle collision test further includes: sending a decoupling state to the centralized control center control room subsystem.

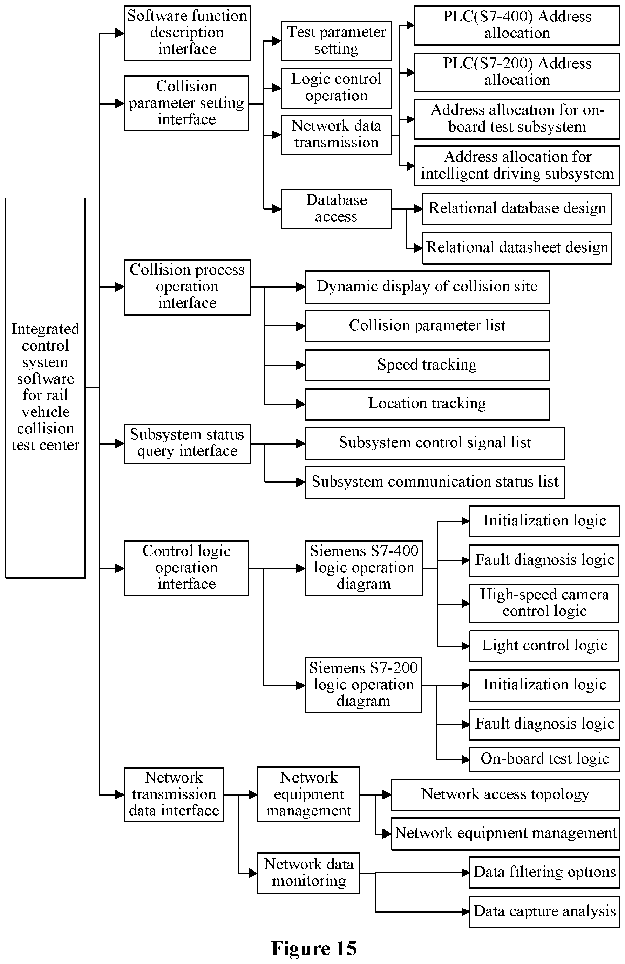

Illustratively, a software operation process of the integrated control system is shown in Figure 15, and for the working principle of the integrated control method, reference may be made to the system embodiment described above, which will not be repeated herein.

An integrated control system and method for a rail vehicle collision test is provided according to embodiments of the present disclosure. The integrated control system includes: an industrial control subsystem, a video monitoring and wireless network integration subsystem, a database subsystem, a ground speed measurement and positioning subsystem, and a centralized control center control room subsystem. The industrial control subsystem sends a system status of the one or more subsystems to the centralized control center control room subsystem, and performs a corresponding operation based on a control signal sent by the centralized control center control room subsystem. The video monitoring and wireless network integration subsystem obtains a shooting video of a test rail vehicle in a collision test, creates a data transmission network, and transmits the shooting video to the centralized control center control room subsystem and the database subsystem through the data transmission network. The database subsystem stores the shooting video. The ground speed measurement and positioning subsystem obtains a real-time speed of the test rail vehicle when passing a preset position point in the collision test, sends the real-time speed and positioning information of the preset position point to the centralized control center control room subsystem, and receives a control instruction sent by the centralized control center control room subsystem. The centralized control center control room subsystem displays the shooting video, obtains the system status of the one or more subsystems of the industrial control subsystem, sends the control signal to the industrial control subsystem based on the system status or an experimental requirement, and sends the control instruction based on the real-time speed and the positioning information of the preset position point. It can be seen that, signal interaction is performed among the various subsystems in the integrated control system for a rail vehicle collision test provided by the embodiments of the present disclosure, thus the coordination performance of the rail vehicle collision test system is improved.

The present disclosure is described with reference to flowcharts and/or block diagrams of the methods, devices (systems) and computer program products according to the embodiments. It should be understood that, each flow or a combination of flows in the flowcharts and/or each block or a combination of blocks in the block diagrams may be implemented by computer program instructions. The computer program instructions may be provided to a general-purpose computer, a dedicated computer, an embedded processor or processors of other programmable data processing devices to generate a machine, so that the instructions executed by the computer or the processors of the other programmable data processing devices generate a device for implementing functions specified in one or more flows of the flowcharts and/or one or more blocks of the block diagrams.

In a typical configuration, the device includes one or more processors (CPUs), memory, and buses. The device may also include input/output interfaces, network interfaces, and so on.

The memory may be implemented by computer readable medium of a non-persistent memory, a random-access memory (RAM), and/or a non-volatile memory, such as a read only memory (ROM) or a flash RAM. The memory includes at least one memory chip. The memory is an example of the computer-readable medium.

The computer readable medium may include a persistent and non-persistent, and removable and non-removable medium. Information may be stored by any methods or technologies. The information may be computer readable instructions, data structures, program modules or other data. The storage medium of the computer may include but is not limited to a phase change random-access memory (PRAM), a static random-access memory (SRAM), a dynamic random-access memory (DRAM), other types of random-access memory (RAM), read-only memory (ROM), electrically erasable programmable read-only memory (EEPROM), flash memory or other memory, compact disk read-only memory (CD-ROM), digital Versatile disc (DVD), or other optical storage, cassette tape, tape disk memory or other magnetic storage, or any non-transmission medium which can be used to store information accessible by the computer. As defined in the present disclosure, the computer readable medium does not include transitory computer-readable media, such as a modulated data signal and carrier wave.

It should be noted that, terms "include", "comprise" or any other variants are intended to be non-exclusive. Therefore, a process, method, article or device including multiple elements includes not only the elements but also other elements that are not enumerated, or also include the elements inherent for the process, method, article or device. Unless expressively limited, the statement "including a..." does not exclude the case that other similar elements may exist in the process, the method, the article or the device other than enumerated elements..

It should be understood by those skilled in the art that the embodiments of the present disclosure may be implemented as methods, systems or computer program products. Therefore, the present disclosure may be implemented by embodiments of only hardware, only software, or a combination of hardware and software. The present disclosure may be implemented as computer program products on one or more computer storage mediums (including but not limited to a magnetic disk memory, CD-ROM and an optical memory or the like) including computer-readable program codes.

The above are merely embodiments of the present disclosure, and are not to limit the present disclosure. For those skilled in the art, various modifications and changes may be made to the embodiments of the present disclosure. Any modification, equivalent replacement, improvement made within the spirit and principle of the present disclosure shall be included in the scope defined by the claims of the present disclosure.

## Claims

1. An integrated control system for a rail vehicle collision test, comprising:
an industrial control subsystem, wherein the industrial control subsystem comprises one or more subsystems of a collision vehicle subsystem, a high-speed camera subsystem, a lighting control subsystem, a dynamic force measurement subsystem, an on-board test subsystem, an intelligent driving subsystem, and a synchronous triggering subsystem; and the industrial control subsystem is configured to: send a system status of the one or more subsystems to a centralized control center control room subsystem, and perform an operation based on a control signal sent by the centralized control center control room subsystem; and the control signal comprises a synchronization signal, a trigger signal, and an emergency stop signal;
a video monitoring and wireless network integration subsystem, configured to: obtain a shooting video of a test rail vehicle in a collision test, create a data transmission network, and transmit the shooting video to the centralized control center control room subsystem and a database subsystem through the data transmission network;
the database subsystem, configured to store the shooting video;
a ground speed measurement and positioning subsystem, configured to: obtain a real-time speed of the test rail vehicle when the test rail vehicle passes a preset position point in the collision test, send the real-time speed and positioning information of the preset position point to the centralized control center control room subsystem, and receive a control instruction sent by the centralized control center control room subsystem; and
the centralized control center control room subsystem, configured to: display the shooting video, obtain the system status of the one or more subsystems of the industrial control subsystem, send the control signal to the industrial control subsystem based on the system status or an experimental requirement, and send the control instruction based on the real-time speed and the positioning information of the preset position point.

2. The integrated control system for a rail vehicle collision test according to claim 1, wherein the centralized control center control room subsystem being configured to obtain the system status of the one or more subsystems of the industrial control subsystem and send the control signal to the industrial control subsystem based on the system status or the experimental requirement comprises the centralized control center control room subsystem being configured to: determine whether the system status comprises a system failure status, and send the emergency stop signal to the industrial control subsystem in case of determining that the system status comprises the system failure status.

3. The integrated control system for a rail vehicle collision test according to claim 1, wherein the centralized control center control room subsystem being configured to send the control instruction based on the real-time speed and the positioning information of the preset position point comprises the centralized control center control room subsystem being configured to: determine whether an absolute value of a difference between the real-time speed and a preset speed is greater than a first preset difference value, send a speed control instruction to the industrial control subsystem in case of determining that the absolute value of the difference between the real-time speed and the preset speed is greater than the first preset difference value, and send an emergency stop instruction to the industrial control subsystem in case of determining that the absolute value of the difference between the real-time speed and the preset speed is not greater than the first preset difference value.

4. The integrated control system for a rail vehicle collision test according to claim 1, wherein the collision vehicle subsystem is configured to: control the test rail vehicle to perform a decoupling operation in a case that the emergency stop signal is not received within a preset time period when the test rail vehicle is in the collision test.

5. The integrated control system for a rail vehicle collision test according to claim 4, wherein the collision vehicle subsystem is configured to: send a decoupling state to the centralized control center control room subsystem.

6. An integrated control method for a rail vehicle collision test, applied to the integrated control system for a rail vehicle collision test according to any one of claims 1 to 5, the integrated control method comprising:
obtaining a system status of each subsystem, and determining a control signal based on the system status or an experimental requirement;
obtaining a shooting video of a test rail vehicle in a collision test, creating a data transmission network, and transmitting the shooting video through the data transmission network;
obtaining a real-time speed of the test rail vehicle when the test rail vehicle passes a preset position point in the collision test and positioning information of the preset position point;
determining a control instruction based on the real-time speed and the positioning information of the preset position point; and
performing an operation based on the control signal and the control instruction, wherein the control signal comprises a synchronization signal, a trigger signal, and an emergency stop signal.

7. The integrated control method for a rail vehicle collision test according to claim 6, wherein the obtaining a system status of each subsystem, and determining a control signal based on the system status or an experimental requirement comprises:
determining whether the system status comprises a system failure status, and sending the emergency stop signal to the industrial control subsystem in case of determining that the system status comprises the system failure status.

8. The integrated control method for a rail vehicle collision test according to claim 6, wherein the determining a control instruction based on the real-time speed and the positioning information of the preset position point comprises:
determining whether an absolute value of a difference between the real-time speed and a preset speed is greater than a first preset difference value;
sending a speed control instruction to the industrial control subsystem in case of determining that the absolute value of the difference between the real-time speed and the preset speed is greater than the first preset difference value; and
sending an emergency stop instruction to the industrial control subsystem in case of determining that the absolute value of the difference between the real-time speed and the preset speed is not greater than the first preset difference value.

9. The integrated control method for a rail vehicle collision test according to claim 6, further comprising:
controlling the test rail vehicle to perform a decoupling operation in a case that the emergency stop signal is not received within a preset time period when the test rail vehicle is in the collision test.

10. The integrated control method for a rail vehicle collision test according to claim 9, further comprising: sending a decoupling state to the centralized control center control room subsystem.
